# EUROPEAN PATENT APPLICATION

(11) **EP 1 900 790 A1**
(43) Date of publication of application: **19.03.2008**
(21) Application number: 06731248.8
(22) Date of filing: 06.04.2006
(51) Int. Cl.: C09K 11/64, C09K 11/08

(54) **STRESS LUMINESCENT MATERIAL, PROCESS FOR PRODUCING THE SAME, COMPOSITE MATERIAL CONTAINING THE STRESS LUMINESCENT MATERIAL, AND MATRIX STRUCTURE OF THE STRESS LUMINESCENT MATERIAL**

(30) Priority: 08.04.2005 JP 2005112798; 20.03.2006 JP 2006076465
(71) Applicant: National Institute of Advanced Industrial Science and Technology, Tokyo 100-8921 (JP)
(72) Inventor: XU, Chao-Nan, c/o National Ins. of Adv. Industrial, Tosu-shi Saga 841-0052 (JP); YAMADA, Hiroshi, c/o National Ins. of Adv. Indust., Tosu-shi Saga 841-0052 (JP)
(74) Representative: Graf von Stosch, Andreas
(86) International application number: PCT/JP2006/307300
(87) International publication number: WO 2006/109659

(57) **Abstract**

The present invention is to provide a stress-stimulated luminescent material which has a unique crystal structure and which emits conventionally unachievable intense light.

The stress-stimulated luminescent material of the present invention includes a basic structure in which a plurality of tetrahedral molecules each having an AlO₄-like tetrahedral structure or an SiO₄-like tetrahedral structure share atoms of apexes of the tetrahedral structures so as to be coupled to one another so that a basic material structure is formed and at least either alkali metal ions or alkali earth metal ions are inserted into a void of the base material structure, wherein at least either the alkali metal ions or the alkali earth metal ions inserted into the void are partially substituted by at least either rare earth metal ions or transition metal ions.

## Description

### TECHNICAL FIELD

The present invention relates to (i) a stress-stimulated luminescent material which emits particularly intense light in response to a mechanical stress, (ii) a manufacturing method thereof, (iii) a composite material having the stress-stimulated luminescent material, and (iv) a base material structure of the stress-stimulated luminescent material.

### BACKGROUND ART

Conventionally, such a phenomenon that visible light is emitted in response to various stimuli from the outside (external stimuli) has been known (such phenomenon is so-called "fluorescent phenomenon"). A material exhibiting the fluorescent phenomenon is referred to as a fluorescent material, and is used in various fields such as a lamp or a panel light, various types of displays such as a cathode ray tube or a plasma display panel, pigments, and the like.

Further, a large number of materials exhibiting the fluorescent phenomenon in response to external stimuli such as an ultraviolet ray, an electron ray, an X ray, a radiant ray, an electric field, and chemical reaction (i.e., luminescent materials) are known.

Recently, the inventors of the present invention found a stress-stimulated luminescent material which emits light due to strain caused by applying a mechanical stress, and evaluation thereof and a utilization thereof have been developed.

Specifically, as such a stress-stimulated luminescent material, the inventors of the present invention developed: a stress-stimulated luminescent material having a spinel structure, a corundum structure, or a β alumina structure (see Patent Document 1); a silicate stress-stimulated luminescent material (see Patent Documents 2 and 3); a high-luminescence intensity stress-stimulated luminescent material made of defect-controlled aluminate (see Patent Document 4); a method in which a stress distribution is visualized and evaluated by applying a mechanical stress such as compression, tension, and twist, to a composite material containing an epoxy resin and a test piece coated with a film made of the composite material (see Patent Documents 4 and 5); a high-luminescence intensity mechanoluminescent material, allowing a wurtzite structure and a blende structure to coexist therein, which contains oxide, sulfide, selenide, and telluride, as main components (see Patent Document 6); and the like.

The stress-stimulated luminescent material can repetitively emit light semi-permanently with such luminescence intensity that the emission can be confirmed by eyes. Further, by using these stress-stimulated luminescent materials, it is possible to measure a stress distribution of a structure including the stress-stimulated luminescent material.

Examples of the measurement of the stress distribution include: a method in which a stress or a stress distribution is measured by using a stress-stimulated luminescent material; a system for measuring the stress distribution (see Patent Document 7); a luminescent head for directly converting a mechanical external force into an optical signal so as to transmit the optical signal; a remote switching system using the luminescent head (see Patent Document 8); and the like.

However, luminescence intensity of the conventional stress-stimulated luminescent material may be insufficient. Thus, in order to broaden a usage and application of the stress-stimulated luminescent material, it is necessary to develop a stress-stimulated luminescent material which can exhibit higher luminescence intensity.
[Patent Document 1]
Japanese Unexamined Patent Publication No. 119647/2000 (Tokukai 2000-119647)(Publication date: April 25, 2000)
[Patent Document 2]
Japanese Unexamined Patent Publication No. 313878/2000 (Tokukai 2000-313878)(Publication date: November 14, 2000)
[Patent Document 3]
Japanese Unexamined Patent Publication No. 165973/2003 (Tokukai 2003-165973)(Publication date: June 10, 2003)
[Patent Document 4]
Japanese Unexamined Patent Publication No. 49251/2001 (Tokukai 2001-49251)(Publication date: February 20, 2001)
[Patent Document 5]
Japanese Unexamined Patent Publication No. 292949/2003 (Tokukai 2003-292949)(Publication date: October 15, 2003)
[Patent Document 6]
Japanese Unexamined Patent Publication No. 43656/2004 (Tokukai 2004-43656)(Publication date: February 12, 2004)
[Patent Document 7]
Japanese Unexamined Patent Publication No. 215157/2001 (Tokukai 2001-215157)(Publication date: August 10, 2001)
[Patent Document 8]
Japanese Unexamined Patent Publication No. 77396/2004 (Tokukai 2004-77396)(Publication date: March 11, 2004)

### DISCLOSURE OF INVENTION

The present invention was made in view of the foregoing problems, and an object of the present invention is to provide (i) a stress-stimulated luminescent material which exhibit high luminescence, (ii) a manufacturing method thereof, and (iii) a base material structure required in the stress-stimulated luminescent material so as to exhibit high luminescence intensity.

The inventors of the present invention focused on a crystal structure of the stress-stimulated luminescent material and diligently studied the stress-stimulated luminescent material which emits intense light. As a result, they found a base material structure required in the stress-stimulated luminescent material so as to emit intense light, thereby completing the present invention. That is, the base material structure of the stress-stimulated luminescent material is arranged so that a minimum unit of its crystal structure has a three-dimensional framework structure, having at least AlO₄-like tetrahedral structures and SiO₄-like tetrahedral structures, in which apexes of the tetrahedrons are shared by one another so as to provide a large void and a flexible bond. Further, a stress-stimulated luminescent material whose framework structure is feldspathic and which incorporates specific metal ions as a luminescence center emits particularly intense light. The inventors found this, thereby completing the present invention.

That is, in order to solve the foregoing problems, a stress-stimulated luminescent material according to the present invention comprising a basic structures in which a plurality of molecules each having at least an AlO₄-like tetrahedral structure or an SiO₄-like tetrahedral structure share atoms of apexes of the tetrahedral structures so as to be coupled to one another so that a basic material structure is formed and at least either alkali metal ions or alkali earth metal ions are inserted into a void of the base material structure, wherein the base material structure has an asymmetric framework structure, and at least either the alkali metal ions or the alkali earth metal ions inserted into the void are partially substituted by at least either rare earth metal ions or transition metal ions.

It is preferable to arrange the stress-stimulated luminescent material so that the basic structure is a feldspar structure. For example, in the stress-stimulated luminescent material, it is preferable that the basic structure has a composition of aluminosilicate and has a feldspar-like structure, more preferably, an anorthite-like structure. Further, it is preferable to arrange the stress-stimulated luminescent material so that the basic structure has a triclinic structure belonging to a P-1 space group.

It is preferable to arrange the stress-stimulated luminescent material so that: the basic structure is represented by

MₓN₁₋ₓAl₂Si₂O₈ (1);

XₓY₁₋ₓAlSi₃O₈ (2);

(XₓM₁₋ₓ)(SiₓAh₁₋ₓ)AlSi₂O₈ (3);

or

XₓM_{y}ca_{1-x-y}Al₂₋ₓSi₂₊ₓO₈ (4),

where each of M and N represents bivalent metal ions, and at least one kind thereof is Ca, Sr, Ba, Mg, or Mn, and each of X and Y represents monovalent metal ions, and at least one kind thereof is Li, Na, or K, and 0 ≤ x ≤ 0.8 and 0 ≤ y ≤ 0.8.

It is preferable to arrange the stress-stimulated luminescent material so that the alkali metal ions or the alkali earth metal ions inserted into the void of the base material structure are partially substituted by rare earth metal ions or transition metal ions whose ion radius is different from an ion radius of the alkali metal ions or the alkali earth metal ions.

It is preferable to arrange the stress-stimulated luminescent material so that an amount of the rare earth metal or the transition metal is 0.1 mol % or more and 10 mol % or less. In other words, 0.1 mol % or more and 10 mol % or less of the alkali metal and/or the alkali earth metal of the luminescent material is substituted by the rare earth metal and/or the transition metal. That is, an amount of the transition metal, the rare earth metal, or an additive thereof is 0.1 mol % to 10 mol % in the luminescent material.

It is preferable to arrange the stress-stimulated luminescent material so that the rare earth metal is at least one kind selected from Eu, Dy, La, Gd, Ce, Sm, Y, Nd, Tb, Pr, Er, Tm, Yb, Sc, Pm, Ho, and Lu, and the transition metal is at least one kind selected from Cr, Mn, Fe, Sb, Ti, Zr, V, Co, Ni, Cu, Zn, Nb, Mo, Ta, and W.

It is preferable to arrange the stress-stimulated luminescent material so that at least Eu (Eu ions) is inserted into the void. Note that, luminescent center ions other than the Eu ions may be inserted into the void, or a mixture of the Eu ions and other luminescent center ions may be inserted into the void.

It is preferable to arrange the stress-stimulated luminescent material so that the stress-stimulated luminescent material is represented by Ca_{1-y}Q_{y}Al₂Si₂O₈ where Q is at least one kind of a luminescent center and 0.001 ≤ y ≤ 0.1.

It is preferable to arrange the stress-stimulated luminescent material so that the stress-stimulated luminescent material is represented by Ca₁₋ₘ₋ₙNₙEuₘAl₂Si₂O₈ where N is bivalent metal ions and 0 < m ≤ 0.1 and 0 ≤ n ≤ 0.9.

A composite material of the present invention includes any one of the aforementioned luminescent materials. It is preferable to arrange the composite material so as to further include a luminescent material emitting light whose color is different from a color of light emitted by the stress-stimulated luminescent material.

In order to solve the foregoing problems, a method of the present invention for manufacturing a stress-stimulated luminescent material comprising the steps of: forming a basic structure for allowing formation of a base material structure having an asymmetric framework structure so that a plurality of molecules having at least AlO₄-like tetrahedral structures and SiO₄-like tetrahedral structures share atoms of apexes of the tetrahedrons and at least either alkali metal ions or alkali earth metal ions are inserted into a void of the base material structure; and partially substituting the alkali metal ions or the alkali earth metal ions inserted into the void by at least either rare earth metal ions or transition metal ions.

A base material structure of the present invention is included in a stress-stimulated luminescent material, wherein each of polyhedral molecules has at least an AlO₄-like tetrahedral structure or an SiO₄-like tetrahedral structure, and the polyhedral molecules share atoms of apexes of the tetrahedrons so as to be coupled to one another so that a void exists therein, and the base material structure has an asymmetric framework structure. Either the alkali metal ions or the alkali earth metal ions are inserted into the void of the base material structure so as to form a basic structure, and the ions inserted into the void is partially substituted by luminescent center ions, so that the base material structure can be used as a stress-stimulated luminescent material.

As described above, the luminescent material according to the present invention comprising a basic structure in which a plurality of molecules each having at least an AlO₄-like tetrahedral structure or an SiO₄-like tetrahedral structure share atoms of apexes of the tetrahedral structures so as to be coupled to one another so that a basic material structure is formed and at least either alkali metal ions or alkali earth metal ions are inserted into a void of the base material structure, wherein the base material structure has an asymmetric framework structure, and at least either the alkali metal ions or the alkali earth metal ions inserted into the void are partially substituted by at least either rare earth metal ions or transition metal ions. That is, the stress-stimulated luminescent material includes the base material structure for exhibiting high luminescence intensity in response to a stress. The base material structure of the stress-stimulated luminescent material has a void which is likely to strain the base material structure, so that it is possible to realize high luminescence intensity which cannot be achieved by the conventional art, thereby broadening a usage and application of the stress-stimulated luminescent material.

Additional objects, features, and strengths of the present invention will be made clear by the description below. Further, the advantages of the present invention will be evident from the following explanation in reference to the drawings.

### BRIEF DESCRIPTION OF DRAWINGS

Fig. 1 is a schematic illustrating a crystal structure of a stress-stimulated luminescent material (CaAl₂Si₂O₈) according to the present invention.
Fig. 2 is a diffraction diagram illustrating powder X-ray diffraction patterns of Ca_{0.985}Eu_{0.01}Dy_{0.005}Al₂Si₂O₈.
Fig. 3 is a schematic illustrating a stress-stimulated luminescence spectrum of Ca_{0.985}Eu_{0.01}Dy_{0.005}Al₂Si₂O₈.
Fig. 4 is a graph illustrating how stress-stimulated luminescence of Ca_{0.985}Eu_{0.01}Dy_{0.005}Al₂Si₂O₈ changes with time passage and how a load changes with time passage.

### BEST MODE FOR CARRYING OUT THE INVENTION

The following describes an embodiment of the present invention.

A stress-stimulated luminescent material of the present invention is arranged so that a luminescent center is inserted into a basic structure having: a three-dimensional structure (three-dimensional frame structure) made of plural molecules each having at least an AlO₄-like tetrahedral structure or an SiO₄-like tetrahedral structure; and an asymmetric flexible frame structure.

The basic structure is arranged so that at least alkali metal ions or alkali earth metal ions are inserted into a void of a base material structure made of the plural molecules each having at least a tetrahedral structure so that molecules of apexes of the polyhedrons are shared so as to be coupled to one another. Further, the base material structure further has an asymmetric framework structure.

The "polyhedral-structure molecule" refers to a molecule whose polyhedral structure is formed by linking a central atom to another atom. That is, the polyhedron is virtual. For example, a tetrahedron of SiO₄ is formed by linking four oxygen atoms, which are coupled to Si, to one another. The polyhedral-structure molecule is an oxide in which apexes of oxygen are shared for example.

The polyhedral-structure molecules share atoms of the apexes of the polyhedrons so as to be coupled to one another, thereby forming the base material structure. The polyhedral-structure molecules constituting the base material structure may be identical to each other or may be different from each other as long as each polyhedral-structure molecule has at least the tetrahedral structure.

In other words, the "base material structure" is such that: molecules of the same kind or of different kinds having tetrahedral structures constitute a minimum unit of the crystal by sharing apexes of the molecules so that the molecules are coupled to one another.

As a result, the base material structure has a mesh three-dimensional structure including a large void (space) therein. Further, various cations (alkali metal ions or alkali earth metal ions) are inserted into the void (space), thereby forming a frame structure of the stress-stimulated luminescent material. The frame structure serves as a basic structure (basic frame) of the stress-stimulated luminescent material according to the present invention. Note that, in forming the base material structure (three-dimensional structure) of the stress-stimulated luminescent material, it is preferable to use tetrahedral or octahedral molecules each having at least the aforementioned tetrahedral structure.

The aforementioned "asymmetric framework structure" shows not only the framework structure but also a structure which is spontaneously strained (described later) or has elastic anisotropy. Such a base material structure is likely to be strained and is likely to efficiently change an electronic structure of a luminescent center positioned in a center of the frame due to the strain energy. As a result, the structure which emits particularly intense light in response to a stress is formed.

In this way, the stress-stimulated luminescent material of the present invention essentially includes the flexible three-dimensional frame structure and the asymmetric flexible framework structure at the same time.

First, as to the three-dimensional framework which is a first requirement, a structure similar to the three-dimensional framework does not necessarily emit light in response to a stress. For example, SrAl₂O₄ is favorable as a base material structure of a stress-stimulated luminescent material which emits extremely intense light in response to a stress. However, if other alkali earth ions, e.g., Ca ions are used instead of Sr of SrAl₂O₄, the resultant does not emit light at all in response to a stress. Of course, CaAl₂O₄ exhibits high-luminescence intensity ultraviolet-ray-excited luminescence. Further, if Ca ions are partially used instead as an Eu luminescent center for example, the resultant exhibits intense and beautiful blue fluorescent luminescence but does not emit light in response to a stress, i.e., the resultant is not excited by a stress so as to emit light. In applying a stress to the three-dimensional framework structure, strain energy is likely to resonate through the frame. That is, the stress is highly efficiently utilized as energy. However, if the three-dimensional framework structure is solely used, this does not necessarily result in a structure which emits light in response to a stress.

In order to realize stress-stimulated luminescence, it is extremely important that the flexible framework structure, i.e., the other requirement, is asymmetric in addition to the first requirement. That is, besides the three-dimensional framework structure, it is extremely important that a structure which is spontaneously strained (described later) or has elastic anisotropy is incorporated. For example, it was verified by the inventors that SrAl₂O₄ has extremely great elastic anisotropy. Such anisotropy results in great spontaneous strain. While, it was verified that CaAl₂O₄ which does not emit light in response to a stress shows neither elastic anisotropy nor spontaneous strain.

In this way, the stress-stimulated luminescent material of the present invention includes the base material structure having the two structures (i.e., an asymmetric and flexible three-dimensional frame structure), so that it is possible to emit particularly intense light in response to a stress. If either one of the two structures is not included, it is impossible to realize stress-stimulated luminescence. The technical significance of the present invention is that the inventors found a structure required in realizing stress-stimulated luminescence.

For example, the inventors confirmed that: a composition which is represented by the same molecular formula as that of the base material structure having the two structures for emitting intense light in response to a stress and which has a structure similar to the base material structure does not have a function for emitting light in response to a stress. For example, in publicly known documents (Fract-Luminescence of rare earth element-Doped hexacelsian (BaAl₂Si₂O₈), Jpn. J Appl. Phys. (1997) Volume 36 6B, ppL781-783, and Full Color triboluminescence of rare-earth-doped hexacelsian (BaAl₂Si₂O₈) Solid State Commun (1998) Volume 107 pp.763-767), it is disclosed that BaAl₂Si₂O₈ exhibits fract-luminescence. The BaAl₂Si₂O₈ is manufactured by a manufacturing method completely different from the manufacturing method of the present invention. Thus, the resultant structure is a hexacelsian-layer structure as described in the documents. This is completely different from the crystal structure of the base material structure of the preset invention. The BaAl₂Si₂O₈ having the hexacelsian-layer structure exhibits fract-luminescence but does not exhibit the stress-stimulated luminescence based on mechanical strain energy. This fact shows that a base material structure suitable for the stress-stimulated luminescence and a base material structure suitable for the fract-luminescence are different from each other and luminescence principles of both the structures are completely different from each other.

Likewise, the inventors proposed a luminescent material obtained by incorporating a base material structure made of Y₂Si₂O₅ and Ba₂MgSi₂O₇ into a silicate luminescent material (Patent Documents 2 and 3) of the invention previously applied. However, each of these luminescent materials does not have the base material structure proposed by the present invention, and friction luminescence or instantaneous-compression luminescence of a disc pellet is utilized to measure its luminescence intensity so as to give evaluation thereof. In this manner, the fract-luminescence greatly contributes to luminescence of these luminescent materials. While, luminescence derived from deformation is caused by a principle completely different from the fract-luminescence (for example, see Hybrid Stress-Stimulated Luminescent Material, Ceramics, 39(2), pages 130-133, 2004), so that high-luminescence intensity fract-luminescence does not necessarily result in deformation luminescence. The inventors confirmed that the previously proposed luminescent material exhibiting high-luminescence intensity fract-luminescence hardly exhibits deformation luminescence.

Into the aforementioned void, at least either the alkali metal ions or the alkali earth metal ions are inserted, and one kind of ions or two or more kinds of ions may be inserted. Further, at least one kind of alkali metal ions and at least one kind of alkali earth metal ions may be inserted. That is, the ions inserted into the void are at least one kind selected from alkali earth metals such as Ca, Mg, Ba, and Sr and alkali metals such as Li, Na, K, Rb, Cs.

Further, in order that the base material structure is more likely to be strained, the alkali metal ions or the alkali earth metal ions inserted into the void of the base material structure may be partially substituted by other ions (for example, rare earth metal ions or transition metal ions). The ions by which the alkali metal ions or the alkali earth metal ions are partially substituted are not particularly limited as long as it is possible to keep the crystal structure (asymmetric and flexible three-dimensional frame structure) of the base material structure. As such ions, it is preferable to use, for example, rare earth metal ions or transition metal ions whose ion radius is different from an ion radius of the alkali metal ions and the alkali earth metal ions inserted into the void of the base material structure. As a result, the base material structure is more easily strained, thereby providing a stress-stimulated luminescent material which exhibits higher luminescence intensity. Note that, the rare earth metal ions or the transition metal ions may be incapable of serving as the below-described luminescent center as long as the rare earth metal ions or the transition metal ions allow the base material structure to be more easily strained.

The stress-stimulated luminescent material is arranged so that the ions inserted into the void of the base material structure are partially substituted by at least either the rare earth metal ions or the transition metal ions. As a result, the stress-stimulated luminescent material can emit light. That is, each of the rare earth metal ions and the transition metal ions serve as a luminescent center (luminescent center ions) of the stress-stimulated luminescent material.

In this way, the stress-stimulated luminescent material of the present invention is arranged so that: at least the alkali metal ions or the alkali earth metal ions are inserted into the void of the base material structure, and the inserted ions are partially substituted by the rare earth metal ions and/or the transition metal ions serving as a luminescent center. Particularly, the stress-stimulated luminescent material includes the base material structure having the flexible three-dimensional frame structure and the flexible framework structure, so that the base material structure has a large void therein. Thus, if strain is generated in the void, the strain energy can be utilized in exciting the luminescent center. In case where the luminescent center is excited, light is emitted when the luminescent center returns from an excited state to a normal state. The stress-stimulated luminescent material has the void which allows the base material structure to be easily strained, so that it is possible to emit particularly intense light in response to a stress.

In this way, the stress-stimulated luminescent material emits light in response to a stress as long as strain is generated in the crystal structure (void) of the three-dimensional framework of the base material structure having the asymmetric framework structure. A mechanical external force causes the base material structure having the three-dimensional structure to be strained, thereby emitting intense light. Herein, the "stress-stimulated luminescence" means a state in which deformation caused by a mechanical external force such as a frictional force, a shearing force, a pressure, and a tension allows the luminescent material to emit light.

Note that, the stress-stimulated luminescent material of the present invention may be arranged in any manner as long as the stress-stimulated luminescent material has such a stress-stimulated luminescent property that at least a mechanical external force allows strain so as to emit light, and light may be emitted by another luminescent mechanism. That is, the crystal structure of the base material structure allows not only the mechanical external force but also various kinds of energy such as an electric field to generate strain as long as the crystal structure of the base material structure can be strained. That is, the stress-stimulated luminescent material can be sufficiently utilized also as a luminescent material other than the stress-stimulated luminescent material.

Specifically, in a field of a luminescent material, it seems to be more difficult to manufacture the stress-stimulated luminescent material than a luminescent material other than the stress-stimulated luminescent material (e.g., an ultraviolet-ray-excited luminescent material, an electric field luminescent material, and the like). For example, if a mechanical external force is applied to the ultraviolet-ray-excited luminescent material without emitting an ultraviolet ray, the ultraviolet-ray-excited luminescent material does not emit light. Further, if a mechanical external force is applied to the electric field luminescent material without applying an electric field, the electric field luminescent material does not emit light. While, it was verified that the stress-stimulated luminescent material can emit light based on a luminescent mechanism other than the stress-stimulated luminescence. For example, the luminescent material exhibiting stress-stimulated luminescence exhibits also other luminescence (electric field luminescence and the like). Thus, the luminescent mechanism of the stress-stimulated luminescent material of the present invention is not particularly limited as long as it shows at least the stress-stimulated luminescence, and the stress-stimulated luminescent material can emit light also on the basis of a luminescent mechanism other than the stress-stimulated luminescence.

Herein, the stress-stimulated luminescent material is detailed as follows.

A basic structure of the stress-stimulated luminescent material is not particularly limited as long as the following condition is satisfied: a plurality of molecules having at least AlO₄-like tetrahedral structures and SiO₄-like tetrahedral structures share atoms of apexes of the tetrahedral structures so as to be coupled to one another so that a base material structure is formed, and at least either alkali metal ions or alkali earth metal ions are inserted into a void of the base material structure.

Such a basic structure serves as a base material of the stress-stimulated luminescent material of the present invention. An example of the base material structure in the stress-stimulated luminescent material of the present invention is a structure generally categorized into a mineral substance referred to as "feldspar group". A crystal structure of the feldspar is characterized in a three-dimensional frame structure in which SiO₄ or AlO₄ tetrahedrons are sequentially coupled to one another, and cations are inserted into a gap therebetween. The three-dimensional frame structure gradually changes depending on distribution of Si and Al and sizes of the cations. Thus, a unique noun is not given to the three-dimensional frame structure whose shape has changed, and the three-dimensional frame structure is diversely categorized as a name of a mineral substance depending on a composition ratio and cations.

For example, in case where a plagioclase series is represented by (Na, Ca)(Si, Al) AiSi₂O₈, this is categorized into a series from NaAlSi₃O₈(Ab) to CaAl₂Si₂O₈(An). Further, depending on a composition range of the plagioclase series, the following names of mineral substances are given.
· Ab100An0-Ab90An10: albite, high-temperature albite, low-temperature albite (700°C)
· Ab90An10-Ab70An30: oligoclace
· Ab70An30-Ab50An50: andesine
· Ab50An50-Ab30An70: labradorite
· Ab30An70-Ab10An90: bytownite
· Ab10An90-Ab0An100: anorthite

Specifically, an example of the basic structure is a feldspar structure having a composition of aluminosilicate. Above all, an anorthite-like structure is favorable.

In the stress-stimulated luminescent material, aluminosilicate refers to aluminosilicate alkali metal salt or aluminosilicate alkali earth metal salt. The aluminosilicate is obtained by partially substituting polysilicate ions by aluminum. In the aluminosilicate, at least either alkali metal ions or alkali earth metal ions are inserted into a void (gap) of its crystal structure. Further, the aluminosilicate has a three-dimensional mesh structure. Thus, the aluminosilicate can be used as the basic structure of the stress-stimulated luminescent material. Note that, a state in which the basic structure is the aluminosilicate can be expressed as follows: The base material structure is AlSi₃O₈- (in case of alkali metal salt) or Al₂Si₂O₈²⁻ (in case of alkali earth metal salt).

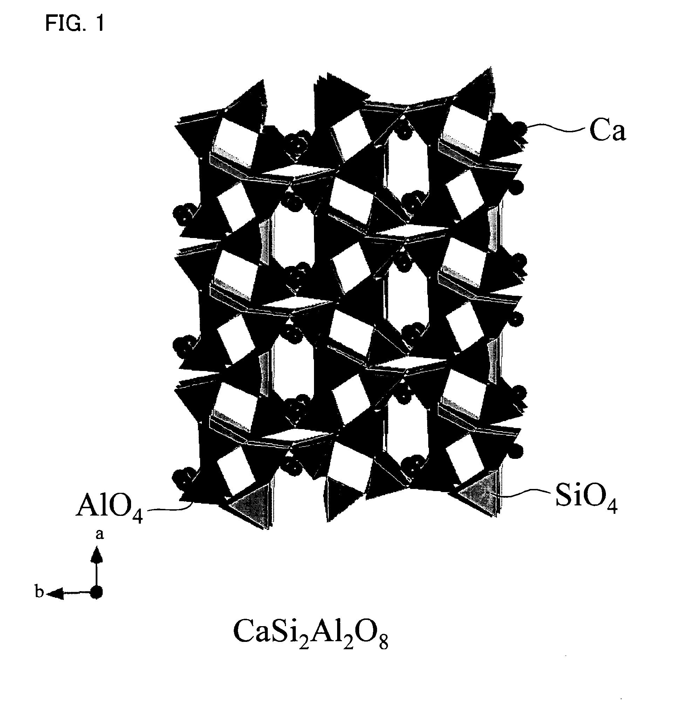

Further, the feldspar-like structure refers to such a structure that: as illustrated in Fig. 1 for example, basic units of the basic structure are AlO₄ tetrahedrons and SiO₄ tetrahedrons, and these tetrahedrons share apexes thereof so as to have a large void, and the tetrahedrons are flexibly coupled to one another, and the structure can be freely strained depending on sizes of alkali metal ions or alkali earth metal ions inserted into the void. Fig. 1 illustrates a crystal structure (basic structure) of CaSi₂Al₂O₈. CaSi₂Al₂O₈ of Fig. 1 has a triclinic structure belonging to a P-1 space group and has an anorthite-like structure.

More specifically, the feldspar structure refers to a feldspathic structure. The feldspar structure is aluminosilicate whose ideal chemical composition is Z (Si, Al)₄O₈ where Z represents alkali metal or alkali earth metal, and 0 < Al/Si ≤ 1. In the aluminosilicate, each of SiO₄ and AlO₄ represented by (Si, Al)O₄ has a tetrahedral structure which has Si or Al in its center and has oxygen atoms (O) in its apexes so as to serve as a minimum unit. Further, a plurality of the tetrahedrons share all apexes and are coupled to one another so as to form a three-dimensional structure. Further, the feldspar structure is such that Z (at least either alkali metal or alkali earth metal) is inserted into a void (gap) of the three-dimensional structure. The feldspar is generally a solid solution containing, as end members, albite NaAlSi₃O₈, anorthite CaAl₂SiO₈, and potassium feldspar KalSi₃O₈. That is, the feldspar structure is a mixture of a plurality of aluminosilicates each having an anorthite-like structure.

Note that, the "anorthite-like structure" refers not only to anorthite (CaAl₂Si₂O₈) but also to a structure similar to the anorthite structure (i.e., a similar composition) as long as at least either the alkali metal or the alkali earth metal can be inserted into the void of the base material structure constituting the three-dimensional structure of the luminescent material. Likewise, the "feldspar-like structure" refers not only to feldspar but also to a structure similar to the feldspar structure (i.e., a similar composition) as long as at least either the alkali metal or the alkali earth metal can be inserted into the void of the base material structure constituting the three-dimensional structure of the luminescent material. The alkali metal ions of the aforementioned structure can be substituted by another monovalent metal ions, or the alkali earth metal ions can be substituted by other bivalent metal ions.

Further, it is preferable that the basic structure has a triclinic structure belonging to a P-1 space group. The triclinic structure belonging to a P-1 space group does not have symmetry in its crystal, so that the triclinic is favorable as a basic structure of the stress-stimulated luminescent material.

Further, the basic structure may be a feldspathoid having a feldspar structure. As in the feldspar, also the feldspathoid is aluminosilicate, and all apexes of AlO₄ and SiO₄ are shared so that AlO₄ and SiO₄ are coupled to one another so as to form a three-dimensional structure. Examples of the feldspathoid include: leucite KalSi₂O₆; nepheline NaAlSiO₄; a composition whose crystal structure is similar to crystal structures of these compositions; and the like.

It is more preferable that the basic structure is aluminosilicate represented by any one of the following expressions (1) to (4).

MₓN₁₋ₓAl₂Si₂O₈ (1)

XₓY₁₋ₓAlSi₃O₈ (2)

(XₓM₁₋ₓ)(SiₓAl₁₋ₓ)AlSi₂O₈ (3),

or

XₓM_{y}Ca_{1-x-y}Al₂₋ₓSi₂₊ₓO₈ (4)

where each of M and N represents bivalent metal ions, and at least one kind thereof is Ca, Sr, Ba, Mg, or Mn, and each of X and Y represents monovalent metal ions, and at least one kind thereof is Li, Na, or K, and 0 ≤ x ≤ 0.8 and 0 ≤ y ≤ 0.8.

In the foregoing expressions (1) to (4), the alkali metal or the alkali earth metal is not necessarily of two kinds as long as each metal is of at least one kind. That is, in the expression (3) for example, it may be so arranged that two or more kinds of alkali metal (X) and two or more kinds of alkali earth metal (M) are included.

Further, in case where the stress-stimulated luminescent material includes plural kinds of alkali metal or alkali earth metal as in the expressions (1) to (4) for example, it is preferable that the plural kinds of alkali metal and/or alkali earth metal are different from one another in terms of an ion radius. As a result, the stress-stimulated luminescent material is more greatly strained than the case of a single kind of alkali metal or a single kind of alkali earth metal. Thus, the stress-stimulated luminescent material is more easily emit light. In other words, if the stress-stimulated luminescent material includes plural kinds of alkali metal and/or alkali earth metal which are different from one another in terms of an ion radius, also spontaneous strain of the stress-stimulated luminescent material changes. The stress-stimulated luminescent material which is spontaneously strained more easily emits light than a stress-stimulated luminescent material showing no spontaneous strain. Thus, the stress-stimulated luminescent material having plural kinds of alkali metal and/or alkali earth metal which are different from one another in terms of an ion radius more easily emits light. In this way, if the spontaneous strain of the stress-stimulated luminescent material is adjusted, it is possible to allow the stress-stimulated luminescent material to easily emit light.

Note that, originally, a luminescent material is structurally changed by change of a temperature and a pressure, so that the luminescent material changes into another phase. If the temperature is raised for example, the luminescent material changes into a favorably symmetric structure. The "spontaneous strain" refers to strain generated at the time when the favorably symmetric structure changes into another structure. That is, the "spontaneous strain" is an index indicative of how much the favorably symmetric structure is strained, and the "spontaneous strain" refers to strain of the luminescent material. Note that, strain generated in the luminescent material by an external force is not regarded as the "spontaneous strain".

Further, the rare earth metal ions and the transition metal ions are not particularly limited as long as they can serve as the luminescent center. Examples of the rare earth metal ions include the following rare earth metal ions: europium (Eu), dysprosium (Dy), lanthanum (La), gadolinium (Gd), cerium (Ce), samarium (Sm), yttrium (Y), neodymium (Nd), terbium (Tb), praseodymium (Pr), erbium (Er), thulium (Tm), ytterbium (Yb), scandium (Sc), promethium (Pm), holmium (Ho), lutetium (Lu), and the like. Further, examples of the transition metal ions include the following transition metal ions: chromium (Cr), manganese (Mn), ferrum (Fe), antimony (Sb), titanium (Ti), zirconium (Zr), vanadium (V), cobalt (Co), nickel (Ni), copper (Cu), zinc (Zn), niobium (Nb), molybdenum (Mo), tantalum (Ta), tungsten (W), and the like. Note that, at least one kind of ions is selected from those ions as the rare earth metal ions and at least one kind of ions is selected from these ions as the transition metal ions.

In the stress-stimulated luminescent material, an amount of the rare earth metal ions and the transition metal ions (amount of the luminescent center) has great influence on the luminescence. The amount is not particularly limited as long as it is possible to keep the three-dimensional structure of the base material structure. The amount is preferably 0.1 mol % or more and 20 mol % or less, more preferably 0.2 mol % or more and 10 mol % or less, particularly preferably 0.5 mol % or more and 5 mol % or less. As a result, the stress-stimulated luminescent material can efficiently emit light. Note that, in case where the amount is less than 0.1 mol %, it is impossible to efficiently emit light. In case where the amount exceeds 20 mol %, the base material structure becomes disarranged, so that light is less efficiently emitted.

Further, in the stress-stimulated luminescent material, its luminescent color changes depending on a type of the luminescent center. For example, if Eu ions are selected as the rare earth metal ions, the stress-stimulated luminescent material emits blue light. Thus, the stress-stimulated luminescent material in which at least Eu (Eu ions) has been inserted emits blue light. A conventional stress-stimulated luminescent material emits intense light at a luminescence wavelength of 500 nm or more (from green to red light), but a luminescent material which emits intense light at a shorter luminescence wavelength of blue to bluish-purple light has not been known.

When the stress-stimulated luminescent material of the present invention includes at least Eu as the luminescent center ions, the stress-stimulated luminescent material includes a crystal structure unique to the present invention, so that it is possible to provide a stress-stimulated luminescent material which particularly emits blue or bluish-purple light.

Conventionally, only a stress-stimulated luminescent material which emits intense green or red light (light whose luminescence wavelength is 500 nm or more) has been known, and a stress-stimulated luminescent material which emits intense blue or bluish-purple light (light whose luminescence wavelength is 400 nm to 500 nm) has not been known. In the aforementioned luminescent material, Eu is used as the rare earth metal ions of the luminescent center, so that it is possible to provide a luminescent material which favorably emits blue light. Note that, the luminescent center is not necessarily of one kind, and a mixture of plural kinds may be used as the luminescent center. For example, it is possible to use a mixture of Eu and Dy.

Specifically, as the stress-stimulated luminescent material which emits particularly intense blue light, it is preferable to adopt a luminescent material which includes aluminosilicate made of an alkali metal oxide or an alkali earth metal oxide, an aluminum oxide, and a silicon oxide, wherein alkali metal ions or alkali earth metal ions thereof are partially substituted by another alkali metal or alkali earth metal ions while keeping a feldspar-like structure, more preferably, an anorthite-like structure, and said another alkali metal or alkali earth metal ions are further substituted by one or more kinds of transition metal ions or rare earth metal ions.

More specifically, it is preferable that the stress-stimulated luminescent material which emits particularly intense blue light is represented by the following expressions (5) and (6),

M_{1-x-y}NₓQ_{y}Al₂Si₂O₈ (5)

X_{1-x-y}YₓQ_{y}Al₂₋ₓSi₂₊ₓO₈ (6)

where each of M and N represents bivalent metal ions, and at least one kind thereof is Ca, Sr, Ba, Mg, or Mn, and each of X and Y represents monovalent metal ions, and at least one kind thereof is Li, Na, or K, and Q represents rare earth metal ions or transition metal ions, and 0 ≤ x ≤0.8 and 0.001 ≤ y ≤ 0.1.

Note that, Q represents one kind of a luminescent center or plural kinds of luminescent centers. y represents an amount of the luminescent center. In case where there are plural kinds of luminescent centers, y represents an amount of each of the luminescent centers.

Note that, in case of the alkali earth metal as represented by the expression (5), each of Al and Si remains 2, so that there is no change in x of the expression. While, in case of the alkali metal as represented by the expression (6), x indicative of the number of kinds of monovalent alkali metal increases so as to balance electric charges, so that tetravalent Si accordingly increases so that (2+x) and trivalent Al accordingly decreases so that (2-x).

Further, it is preferable to arrange the stress-stimulated luminescent material at least Ca is selected as the alkali earth metal and the Ca site is partially substituted by at least one kind of the luminescent center. That is, the luminescent material is represented by the following expression (7),

Ca_{1-y}Q_{y}Al₂Si₂O₈ (7)

where Q represents only Eu or Eu and at least one kind of other luminescent center, and y satisfies 0.001 ≤ y ≤ 0.1.

Note that, the stress-stimulated luminescent material represented by the expression (7) may include not only Ca ions but also bivalent metal ions. Such a stress-stimulated luminescent material can be represented by the following expression (8). That is,

Ca₁₋ₘ₋ₙNₙEuₘAl₂Si₂O₈ (8)

where m satisfies 0 < m < 0.1 and n satisfies 0 ≤ n ≤ 0.9. Further, N represents bivalent metal ions (e.g., alkali earth metal (Sr, Mg, or Mn) and the like). Further, the luminescent center of the expression (8) indicates a case where the luminescent center includes only Eu, but the luminescent center may be combined with at least one kind of other luminescent center.

In case where the luminescent center includes only Eu, m is more than 0 and 0.1 or less. In case where the luminescent center includes a mixture of Eu and other luminescent center ion, an amount (m) of the luminescent center including the mixture is more than 0 and 0.2 or less. That is, in the expressions (7) and (8), an amount of a single luminescent center is more than 0 and 0.1 or less as long as a total amount of the luminescent centers is more than 0 and 0.2 or less.

The stress-stimulated luminescent material can emit particularly intense blue light which cannot be achieved by any conventional technique. Note that, it is preferable that the luminescent center (Q) includes at least Eu in the expression (7). That is, it is preferable that at least Eu is included as the rare earth metal ions of the luminescent center in the expression (7). For example, the luminescent center includes only Eu or a mixture of Eu and Dy. In this way, if Eu is included as the luminescent center, it is possible to realize a stress-stimulated luminescent material which emits particularly intense blue light.

The blue light has a short wavelength, so that its energy is high. Thus, when the stress-stimulated luminescent material is made to emit light, its energy can be used as excitation light. For example, a composite material is formed by mixing a stress-stimulated luminescent material which emits blue light with a luminescent material which emits light different from blue light, e.g., red, yellow, or green light, and which emits light in response to blue light and does not emit light in response to a stress. When a stress is applied to the composite material, only the stress-stimulated blue luminescent material emits light. Further, luminescence of the stress-stimulated blue luminescent material allows its energy to be used as excitation energy for exciting the luminescent material other than the blue luminescent material. Thus, the luminescent material other than the blue luminescent material can be made to emit light. As a result, it is possible to change a color of light emitted by the composite material.

Further, blue luminescence has high energy, so that it is easy to detect the energy with a detector. Thus, it is possible to easily detect luminescence intensity of the luminescent material. Further, blue light, particularly light whose wavelength is about 400 nm, is less emitted from a lighting equipment such as a fluorescent light, which results in such an advantage that there is little interference of the lighting circumstance in measuring the emitted light.

Next, a manufacturing method of the stress-stimulated luminescent material is described as follows.

The stress-stimulated luminescent material can be manufactured by weighing constitutive materials so as to satisfy a composition of the stress-stimulated luminescent material and by sintering the constitutive materials. Amounts of these constitutive materials are set so as to correspond to a ratio of constitutive atoms in accordance with the composition of the stress-stimulated luminescent material to be manufactured.

Further, in order to facilitate strain of the luminescent material, it is preferable to form a lattice defect of the alkali ions or the alkali earth ions. In this case, it is preferable to decrease an amount thereof by 0.1 mol % to 20 mol % from a stoicheiometric composition so that a composition of the alkali metal or the alkali earth metal is a non-stoicheiometric composition.

A sintering temperature in manufacturing the stress-stimulated luminescent material is not particularly limited as long as it is possible to form the base material structure of the three-dimensional structure. It is preferable to set the sintering temperature in accordance with the composition of the stress-stimulated luminescent material. In below-described Example for instance, the stress-stimulated luminescent material cannot be obtained at 1000°C, but the stress-stimulated luminescent material can be obtained at 1200°C. In other words, sintering carried out at 1200°C or higher temperature allows for formation of the base material structure of the stress-stimulated luminescent material, thereby manufacturing the stress-stimulated luminescent material having the base material structure. Note that, the temperature is set according to the composition of the stress-stimulated luminescent material. However, in the present invention, it should be emphasized that the stress-stimulated luminescence is based on formation of the base material structure in the stress-stimulated luminescent material of the present invention.

Note that, constitutive materials for the stress-stimulated luminescent material are not particularly limited as long as each of the constitutive materials becomes an oxide by being sintered. For example, the constitutive materials are weighed and sintered so as to form an alkali metal oxide or an alkali earth metal oxide, an aluminum oxide, a silicon oxide, and a rare earth metal oxide and/or a transition metal oxide in accordance with the composition of aluminosilicate as described above, thereby manufacturing the luminescent material.

As the constitutive materials, it is possible to use an inorganic salt of the alkali metal or the alkali earth metal (carbonate, oxide, halide (e.g., chloride), hydroxide, hydrosulfate, nitrate, and the like) or a salt of an organic compound (acetate, alcoholate, and the like). Further, it is possible to use a salt of an inorganic substance of the rare earth metal or the transition metal (oxide, halide (e.g., chloride), hydroxide, carbonate, hydrosulfate, nitrate, and the like) or a salt of an organic compound (acetate, alcoholate, and the like). Further, as a material for the aluminum oxide, it is possible to use Al₂O₃, and as a material for the silicon oxide, it is possible to use SiO₂.

Note that, in manufacturing the stress-stimulated luminescent material, it is possible to use boric acid and a flux agent such as ammonium chloride. However, in the present invention, it should be emphasized that the sintering is extremely important in the manufacturing steps. Particularly, if the temperature is rapidly dropped at the time of the sintering, it is difficult to obtain a predetermined crystal property, so that it is particularly preferable to slowly (gradually) drop the temperature. For example, as in the below-described Example, the sintering temperature can be gradually raised and dropped by 2°C per minute. If the resultant is amorphous (glass), it is impossible to keep the base material structure of the present invention, so that the amorphous resultant has the same composition as the foregoing composition but has a different structure. This does not allow the stress-stimulated luminescent material to emit light.

### (2) Usage of the stress-stimulated luminescent material according to the present invention

In response to a mechanical external force such as a frictional force, a shearing force, an impulse, a pressure, and the like, the stress-stimulated luminescent material according to the present invention emits light. The luminescence intensity depends on a characteristic of a mechanical external force serving as an excitation source, but it is general that a greater mechanical force applied to the stress-stimulated luminescent material and greater change of the mechanical force are likely to result in higher luminescence intensity. Thus, it is possible to find out the mechanical force exerted to the luminescent material by measuring the luminescence intensity of the luminescent material. As a result, it is possible to detect a state of the stress exerted to the stress-stimulated luminescent material without contacting the stress-stimulated luminescent material, so that it is also possible to visualize the state of the stress. Thus, the stress-stimulated luminescent material of the present invention is expected to be widely applicable not only to a stress detector but also to other fields.

A surface of each of various base materials is coated with a coating film made of the stress-stimulated luminescent material of the present invention, thereby forming a laminate material. In coating the surface, it is possible to adopt: a physical technique such as sputtering and aerosol; and a chemical technique such as evaporative decomposition and spin-coating. In case of forming the coating film by thermal decomposition, a compound which allows for formation of a predetermined base material structure, e.g., a coating solution prepared by dissolving nitrate, halide, or alkoxy compound in a solvent is applied to a surface of a heat-resistance base material, and then the resultant is sintered, thereby forming the film. The heat-resistance base material is not particularly limited, but examples of a material thereof include: heat-resistance glass such as quartz, silicon, graphite, quartz glass, and vycor glass; ceramics such as alumina, silicon nitride, silicon carbide, and molybdenum disilicide; heat-resistance metal or heat-resistance alloy such as heat-resistance steel (e.g. stainless steel), nickel, chromium, titanium, and molybdenum; cermet; cement; concrete; and the like.

The stress-stimulated luminescent material according to the present invention can be used as a composite material made of the stress-stimulated luminescent material and other inorganic material or organic material. The composite material includes the stress-stimulated luminescent material, so that the composite material emits light when a mechanical external force causes the composite material to be strained. For example, an arbitrary ratio of the stress-stimulated luminescent material is mixed and dispersed in a resin or an organic material such as plastic, thereby forming a composite material. If a mechanical external force is applied to the composite material, the stress-stimulated luminescent material included in the composite material is strained. The strain results in excitation energy, so that the composite material emits light.

The stress-stimulated luminescent material according to the present invention can be used with it applied to a surface of other material. In other words, the stress-stimulated luminescent material can be used under such condition that a layer including the stress-stimulated luminescent material (i.e., a stress-stimulated luminescent layer) is formed on a surface of other material. As a result, when a mechanical external force is applied to the material including the stress-stimulated luminescent layer, the stress-stimulated luminescent layer is deformed, so that the stress-stimulated luminescent layer emits light. In this way, if the stress-stimulated luminescent material is used under such condition that the stress-stimulated luminescent layer is formed, it is possible to realize large-area luminescence with a small amount of the stress-stimulated luminescent material.

The stress-stimulated luminescent material according to the present invention can be used as a light storage material or a fluorescent material.

The following Example will further detail the present invention, but the present invention is not limited to the Example.

### [Example]

The following Example describes a case of using Ca as alkali earth metal and using AlO₄ and SiO₄ as polyhedrons of the base material structure (three-dimensional framework).

Predetermined amounts of calcium carbonate CaCO₃, aluminum oxide Al₂O₃, Eu₂O₃, Dy₂O₃, and silicon dioxide SiO₂ were weighed so that a composition of Ca_{1-x-y}EuₓDy_{y}Al₂Si₂O₈ (x=0.01 and y=0.005) was realized. Subsequently, the weighed materials were sufficiently mixed in an ethanol with a ball mill, and then the mixture was dried at 80°C. The heated mixture was crushed in a triturator, and then the crushed mixture was sintered at 1400°C for four hours in a reduction atmosphere (5 % hydrogen-containing argon). Note that, the temperature was slowly raised or dropped by 2°C per minute. Next, the resultant material after the sintering was pulverized, thereby preparing powder of a stress-stimulated luminescent material. Further, the powdery sample was subjected to X-ray diffraction (XRD) measurement, ultraviolet-ray-excited photoluminescence (PL) measurement, and a mechanoluminescence (ML) measurement. Note that, each measurement was carried out (i) under such condition that only the luminescent material (stress-stimulated luminescent material) was used and (ii) under such condition that a composite material including the luminescent material was used.

The composite material including the stress-stimulated luminescent material was manufactured as follows. The resultant inorganic stress-stimulated luminescent material powder was kneaded with organic polymer. In case where an epoxy resin was used as the organic polymer for example, the powder and the epoxy resin were kneaded at a weight ratio of 1 : 1. Then, the resultant was processed into a composite material test piece of 20x5x45 mm.

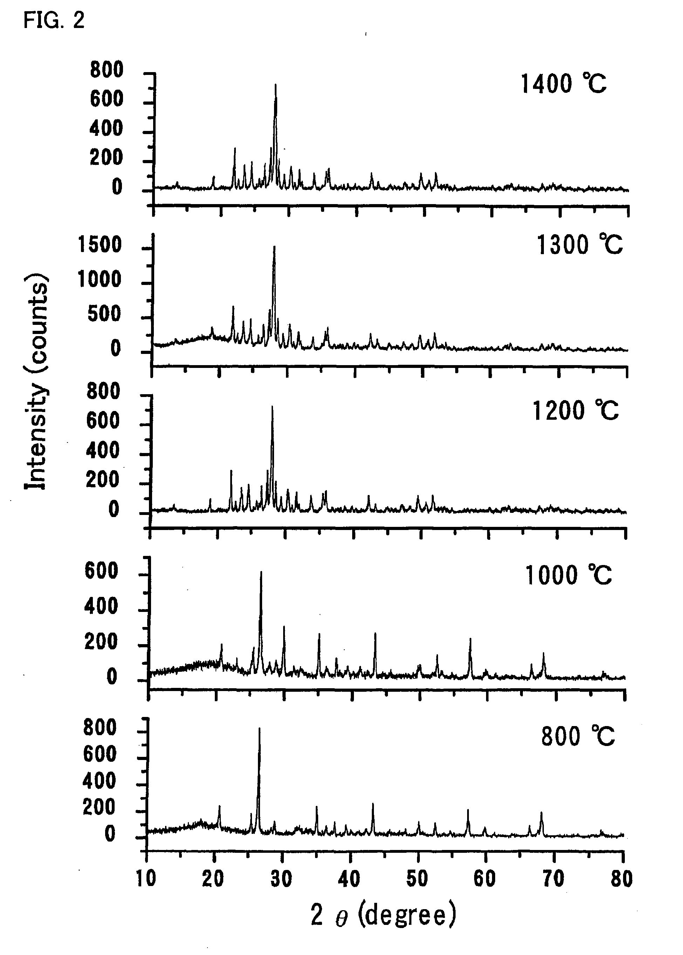

Fig. 2 illustrates XRD patterns under such condition that a sintering temperature was changed. From the diffraction patterns, it became apparent that a triclinic structure belonging to a P-1 space group exhibiting stress-stimulated luminescence appears at 1200°C or higher temperature. Further, the powdery material having this structure can be stably manufactured until the temperature attains at least 1500°C.

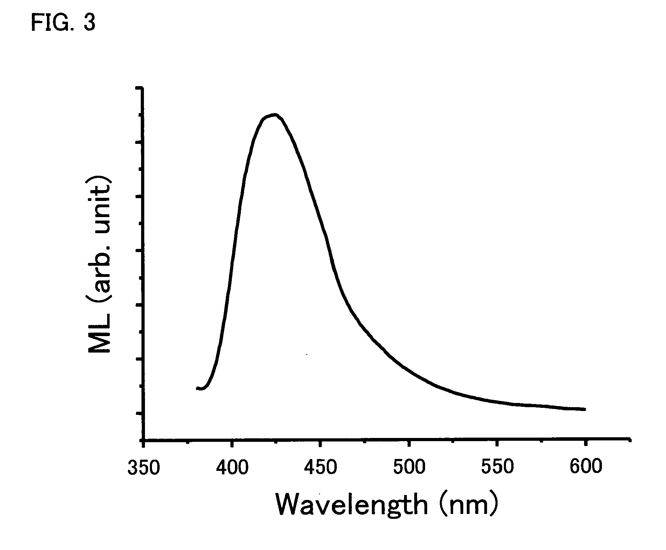

Fig. 3 illustrates a stress-stimulated luminescence spectrum of Ca_{0.985}Eu_{0.01}Dy_{0.005}Al₂Si₂O₈. Further, the stress-stimulated luminescence spectrum of Fig. 3 is in the same manner as in a fluorescent spectrum based on ultraviolet ray excitation, and the spectrum is a luminescence peak (421 nm) corresponding to 4d-5d transition of added Eu²⁺. This shows that Ca_{0.985}Eu_{0.01}Dy_{0.005}Al₂Si₂O₈ emits blue light in response to a stress.

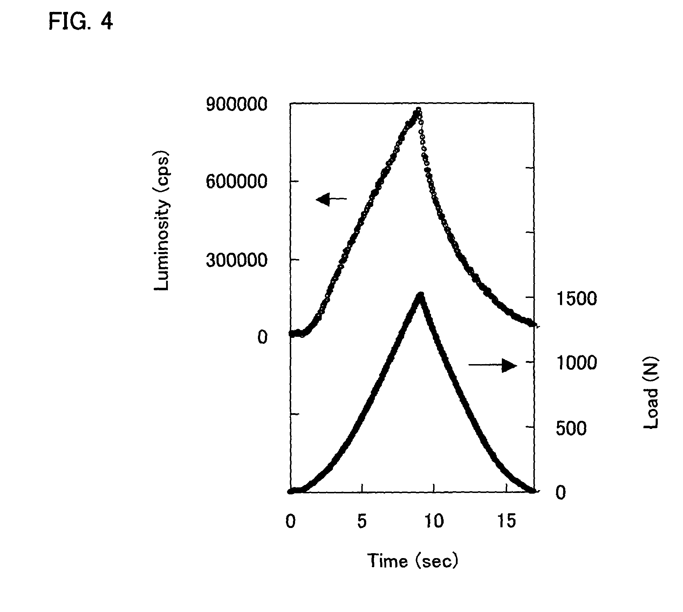

Fig. 4 is a graph illustrating how stress-stimulated luminescence of a composite material including Ca_{0.985}Eu_{0.01}Dy_{0.005}Al₂Si₂O₈ changes with time passage. Fig. 4 is a graph illustrating how a change of a load causes luminescence intensity of the composite material to change. An upper line indicates how the luminescence intensity of the composite material changes with time passage. A lower line indicates how the load changes with time passage. Note that, the luminescence intensity was measured by measuring a luminescent property with a material testing machine while applying a mechanically compressed load of 1500N. As illustrated in Fig. 4, the luminescence intensity caused by the stress-stimulated luminescence increases with increase of the stress.

Note that, although not shown, when only the stress-stimulated luminescent material was used (stress-stimulated luminescent ceramics), it was necessary to apply a greater load than the case where the load was applied to the composite material, but the stress-stimulated luminescent material emitted intense light having the same luminescent wavelength in response to a stress.

Also materials having other kinds of luminescent centers and feldspar-like structures indicated in Tables 1 and 2 were subjected to the same measurement. Each of Tables 1 and 2 shows examples of measurement results concerning (i) a composition of each luminescent material, (ii) stress-stimulated luminescence intensity, and photoluminescence intensity. Each Table shows that the alkali metal ions or alkali earth metal ions have a non-stoichiometric composition, and ions having lattice defect resulted in higher-luminescence intensity stress-stimulated luminescence.

**[Table 1]**

| Material composition | Photo-luminescence intensity | Central wavelength (nm) | Stress-stimulated luminescence intensity (Relative luminescence intensity) |
|---|---|---|---|
| Ca_{0.995}Dy_{0.005}Al₂Si₂O₈ | 11.44 | 410.5 | 10 |
| Ca_{0.89}Na_{0.1}Eu_{0.005}Al_{1.9}Si_{2.1}O₈ | 63.96 | 420.0 | 4153 |
| Ca_{0.95}K_{0.04}Eu_{0.01}Al₂Si₂O₈ | 72.45 | 424.5 | 4748 |
| Ca_{0.95}Na_{0.01}Eu_{0.005}Al_{1.99}Si_{2.01}O₈ | 32.39 | 419.5 | 6702 |
| Ca_{0.97}K_{0.01}Eu_{0.01}Al_{1.99}Si_{2.01}O₈ | 49.44 | 423.0 | 6593 |
| Ca_{0.95}Eu_{0.01}Mn_{0.1}Al₂Si₂O₈ | 24.80 | 422.5 | 10611 |
| Ca_{0.97}Eu_{0.01}Nd_{0.02}Al₂Si₂O₈ | 66.72 | 422.5 | 383 |
| Ca_{0.85}Eu_{0.05}Tb_{0.05}Al₂Si₂O₈ | 48.64 | 431.5 | 30 |
| Ca_{0.97}Eu_{0.01}Ho_{0.01}Al₂Si₂O₈ | 60.95 | 422.5 | 14691 |
| Ca_{0.93}Eu_{0.02}Dy_{0.05}Al₂Si₂O₈, 800°C | 0.28 | 500.0 | 0 |
| Ca_{0.93}Eu_{0.02}Dy_{0.05}Al₂Si₂O₈, 1000°C | 4.79 | 417.0 | 468 |
| Ca_{0.93}Eu_{0.02}Dy_{0.05}Al₂Si₂O₈, 1200°C | 60.31 | 425.5 | 322 |
| Sr_{0.97}Eu_{0.01}Dy_{0.02}Al₂Si₂O₈ | 108.53 | 404.0 | 253 |
| Ba_{0.97}Eu_{0.01}Dy_{0.02}Al₂Si₂O₈ | 49.63 | 433.0 | 53 |
| Ca_{0.2}Sr_{0.77}K_{0.01}Eu_{0.01}Er_{0.01}Al₂Si₂O₈ | 100.46 | 407.0 | 13339 |
| Ca_{0.8}Sr_{0.17}Eu_{0.01}Ho_{0.02}Al₂Si₂O₈ | 56.59 | 420.5 | 8570 |
| Sr_{0.17}Ba_{0.80}Eu_{0.01}Ho_{0.02}Al₂Si₂O₈ | 44.31 | 431.0 | 9 |
| Ca_{0.2}Mg_{0.77}K_{0.01}Eu_{0.01}Dy_{0.01}Al₂Si₂O₈ | 108. | 406.5 | 6680 |

**[Table 2]**

| Material composition | Photo-luminescence intensity | Central wavelength (nm) nm | Stress-stimulated luminescence intensity (Relative luminescence intensity) |
|---|---|---|---|
| Na_{0.1}Ca_{0.1}Sr_{0.77}Eu_{0.01}Sm_{0.01}Al_{1.9}Si_{2.1} O₈ | 60.38 | 421.5 | 12475 |
| Sr_{0.17}Ba_{0.80}Eu_{0.01}Dy_{0.02}Al₂Si₂O₈ | 35.78 | 432.5 | 45 |
| Ca_{0.2}Sr_{0.77}Eu_{0.01}Al₂Si₂O₈ | 113.62 | 407.0 | 7915 |
| Ca_{0.15}Sr_{0.77}Eu_{0.01}Gd_{0.01}Al₂Si₂O₈ | 90.58 | 407.5 | 11731 |
| Mg_{0.2}Sr_{0.77}Eu_{0.01}Dy_{0.02}Al₂Si₂O₈ | 91.54 | 404.5 | 96 |
| Ba_{0.2}Sr_{0.77}Eu_{0.01}Dy_{0.02}Al₂Si₂O₈ | 82.79 | 405.5 | 1 |
| Ca_{0.2}Sr_{0.77}Ce_{0.005}Dy_{0.02}Al₂Si₂O₈ | 22.68 | 409 | 23 |
| Mg_{0.2}Sr_{0.77}Eu_{0.01}Dy_{0.02}Al₂Si₂O₈ | 94.36 | 406.0 | 180 |
| Ba_{0.2}Sr_{0.77}Eu_{0.01}Dy_{0.02}Al₂Si₂O₈ | 75.28 | 405.5 | 50 |
| Ca_{0.2}Sr_{0.77}Ce_{0.005}Dy_{0.02}Al₂Si₂O₈ | 5.08 | 410 | 13 |

The present invention is not limited to the description of the embodiments above, but may be altered by a skilled person within the scope of the claims. An embodiment based on a proper combination of technical means disclosed in different embodiments is encompassed in the technical scope of the present invention.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### INDUSTRIAL APPLICABILITY

The stress-stimulated luminescent material of the preset invention has a base material structure for exhibiting high luminescence intensity, so that the stress-stimulated luminescent material emits particularly intense light in response to a stress. Thus, it is possible to broaden a usage and application of the stress-stimulated luminescent material. Further, it is also possible to realize blue luminescence of high energy which has not been achieved by any conventional art, so that the stress-stimulated luminescent material can be used as a composite material obtained by combining the stress-stimulated luminescent material with other luminescent material.

## Claims

1. A stress-stimulated luminescent material, comprising a basic structure in which a plurality of molecules each having at least an AlO₄-like tetrahedral structure or an SiO₄-like tetrahedral structure share atoms of apexes of the tetrahedral structures so as to be coupled to one another so that a basic material structure is formed and at least either alkali metal ions or alkali earth metal ions are inserted into a void of the base material structure, wherein
the base material structure has an asymmetric framework structure, and
at least either the alkali metal ions or the alkali earth metal ions inserted into the void are partially substituted by at least either rare earth metal ions or transition metal ions.

2. The stress-stimulated luminescent material as set forth in claim 1, wherein the basic structure is a feldspar structure.

3. The stress-stimulated luminescent material as set forth in claim 1 or 2, wherein the basic structure has a triclinic structure belonging to a P-1 space group.

4. The stress-stimulated luminescent material as set forth in any one of claims 1 to 3, wherein the basic structure has an anorthite-like structure.

5. The stress-stimulated luminescent material as set forth in any one of claims 1 to 4, wherein
the basic structure is represented by:
MₓN₁₋ₓAl₂Si₂O₈ (1);
XₓY₁₋ₓAlSi₃O₈ (2);
(XₓM₁₋ₓ)(SiₓAl₁₋ₓ)AlSi₂O₈ (3);
or
XₓM_{y}C_{a1-x-y}Al₂₋ₓSi₂₊ₓO₈ (4),
where each of M and N represents bivalent metal ions, and at least one kind thereof is Ca, Sr, Ba, Mg, or Mn, and each of X and Y represents monovalent metal ions, and at least one kind thereof is Li, Na, or K, and 0 ≤ x ≤ 0.8 and 0 ≤ y ≤ 0.8.

6. The stress-stimulated luminescent material as set forth in any one of claims 1 to 4, wherein the alkali metal ions or the alkali earth metal ions inserted into the void of the base material structure are partially substituted by rare earth metal ions or transition metal ions whose ion radius is different from an ion radius of the alkali metal ions or the alkali earth metal ions.

7. The stress-stimulated luminescent material as set forth in any one of claims 1 to 6, wherein an amount of the rare earth metal or the transition metal is 0.1 mol % or more and 10 mol % or less.

8. The stress-stimulated luminescent material as set forth in any one of claims 1 to 7, wherein the rare earth metal is at least one kind selected from Eu, Dy, La, Gd, Ce, Sm, Y, Nd, Tb, Pr, Er, Tm, Yb, Sc, Pm, Ho, and Lu, and
the transition metal is at least one selected from Cr, Mn, Fe, Sb, Ti, Zr, V, Co, Ni, Cu, Zn, Nb, Mo, Ta, and W.

9. The stress-stimulated luminescent material as set forth in any one of claims 1 to 8, wherein at least Eu is inserted into the void.

10. The stress-stimulated luminescent material as set forth in any one of claims 1 to 9, wherein the stress-stimulated luminescent material is represented by Ca_{1-y}Q_{y}Al₂Si₂O₈ where Q is at least one kind of a luminescent center and 0.001 ≤ y ≤ 0.1.

11. The stress-stimulated luminescent material as set forth in any one of claims 1 to 10, wherein the stress-stimulated luminescent material is represented by Ca₁₋ₘ₋ₙNₙEuₘAl₂Si₂O₈ where N is bivalent metal ions and 0 < m ≤ 0.1 and 0 ≤ n ≤ 0.9.

12. A composite material, comprising the stress-stimulated luminescent material as set forth in any one of claims 1 to 11.

13. The composite material as set forth in claim 12, further comprising a luminescent material emitting light whose color is different from a color of light emitted by the stress-stimulated luminescent material.

14. A method for manufacturing a stress-stimulated luminescent material, comprising the steps of:
forming a basic structure for allowing formation of a base material structure having an asymmetric framework structure so that a plurality of molecules having at least AlO₄-like tetrahedral structures and SiO₄-like tetrahedral structures share atoms of apexes of the tetrahedrons and at least either alkali metal ions or alkali earth metal ions are inserted into a void of the base material structure; and
partially substituting the alkali metal ions or the alkali earth metal ions inserted into the void by at least either rare earth metal ions or transition metal ions.

15. A base material structure, being included in a stress-stimulated luminescent material, wherein
each of polyhedral molecules has at least an AlO₄-like tetrahedral structure or an SiO₄-like tetrahedral structure, and the polyhedral molecules share atoms of apexes of the tetrahedrons so as to be coupled to one another so that a void exists therein, and the base material structure has an asymmetric framework structure.
